(19) **Europäisches Patentamt / European Patent Office / Office européen des brevets**

(11) **EP 3 274 780 B1**

(12) **FASCICULE DE BREVET EUROPEEN**

(45) Date de publication et mention de la délivrance du brevet:
**10.04.2019   Bulletin 2019/15**

(21) Numéro de dépôt: **16718395.3**

(22) Date de dépôt: **21.03.2016**

(51) Int Cl.:
**G05D 1/02** (2006.01)          **A61G 5/04** (2013.01)
**B60L 3/00** (2019.01)

(86) Numéro de dépôt international:
**PCT/FR2016/050621**

(87) Numéro de publication internationale:
**WO 2016/151230 (29.09.2016 Gazette 2016/39)**

(54) **MÉTHODE DE CORRECTION AMELIORÉE D'UNE TRAJECTOIRE DANS UN DISPOSITIF D'AIDE AU DEPLACEMENT DE PERSONNES EQUIPÉ DE CAPTEURS**

VERBESSERTES VERFAHREN ZUR KORREKTUR EINER BAHN IN EINER PERSÖNLICHEN BEWEGUNGSUNTERSTÜTZUNGSVORRICHTUNG MIT SENSOREN

IMPROVED METHOD FOR CORRECTING A TRAJECTORY IN A PERSONAL MOVEMENT ASSISTANCE DEVICE EQUIPPED WITH SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.03.2015   FR 1500575**

(43) Date de publication de la demande:
**31.01.2018   Bulletin 2018/05**

(73) Titulaire: **Institut National des Sciences Appliquées de Rennes**
**35708 Rennes Cedex 7 (FR)**

(72) Inventeurs:
• **PASTEAU, François**
  **35690 Acigné (FR)**
• **BABEL, Marie**
  **35690 Acigné (FR)**
• **BAZIN, Eric**
  **35510 Cesson Sevigne (FR)**
• **GUEGAN, Sylvain**
  **35150 Boistrudan (FR)**

(74) Mandataire: **Novagraaf Technologies**
**12 place des Halles Saint Louis**
**56100 Lorient (FR)**

(56) Documents cités:
**WO-A2-2014/011992      JP-A- H07 110 711**
**US-A1- 2012 101 703**

## Description

### 1. Domaine de l'invention.

L'invention se rapporte au domaine des équipements d'aide au déplacement de personnes, tels que notamment des dispositifs fauteuils roulants motorisés et dirigeables par un utilisateur à partir d'une interface de contrôle. En particulier, l'invention traite d'une méthode de détermination de paramètres de contrôle de la trajectoire à partir d'informations reçues par des capteurs positionnés sur l'équipement d'aide au déplacement et d'informations de consigne de déplacement émises par un utilisateur de l'équipement via l'interface de contrôle.

### 2. Etat de l'art.

Des équipements de types fauteuils roulants motorisés sont couramment utilisés pour assister des personnes à mobilité réduite dans leurs déplacements. Ces fauteuils sont commandés par leur utilisateur en déplacement dit de « marche avant » ou « marche arrière » et selon une direction de déplacement par rapport à un axe nominal de déplacement (direction vers la gauche ou vers la droite). Les consignes de déplacement en vitesse et en direction sont le plus souvent indiquées par un utilisateur à partir d'une interface de type « manette », par exemple. Des modes de correction de la trajectoire de tels équipements existent pour préciser la trajectoire de déplacement en fonction d'éléments propres à l'environnement, tel que notamment des obstacles. Un mode d'analyse de l'environnement par émission-réception de signaux « ultrasons » a déjà été élaboré mais son usage ne permet pas de faire de la correction de trajectoire d'un véhicule conduit par un individu utilisateur à une vitesse nominale de déplacement. Les applications déjà connues concernent par exemple l'asservissement de robot ou permettent d'éviter une collision lors d'un mouvement effectué en rapport à une commande donnée, indépendant d'une application de transport de personnes.

La demande WO2014/148978A1intitulée « *Control System and method for control of a vehicle in connection with detection of an obstacle* » (ANDERSON Jon et Al., SCANIA CV AB ; date de priorité: 19 Mars 2013) décrit un système de contrôle dans un véhicule autonome aux fins d'éviter une collision, et basé sur une réception d'informations en lien avec un obstacle présent dans une trajectoire de déplacement du véhicule.

La demande de brevet JP H07 110711A (NIPPON DENSO CO) du 25 avril 1995 décrit un robot adapté à se déplacer et configuré pour éviter les obstacles en fonction notamment de la position et de la distance à l'obstacle.

D'autres systèmes existent et utilisent une technologie mettant en oeuvre des télémètres à technologie laser pour évaluer la proximité d'obstacles, mais cette technologie est très onéreuse. Enfin, un système basé sur l'analyse d'images conçues à partir de captures depuis une ou plusieurs caméras existe et permet de définir la position d'un équipement en déplacement dans un environnement intérieur (à l'intérieur de locaux), et permet l'évitement d'obstacles. Celui-ci requiert toutefois l'usage d'au moins une caméra, voire de deux caméras si on souhaite fiabiliser la prise de vues et présente en outre des problèmes de détection de surfaces transparentes.

Les solutions existantes présentes des inconvénients, notamment en termes de complexité de traitement et/ou de coût d'implémentation.

### 3. Résumé de l'invention.

L'invention permet d'améliorer au moins un des inconvénients de l'état de l'art, en proposant une méthode de correction d'une trajectoire de déplacement dans un dispositif d'aide au déplacement d'au moins une personne, le dispositif d'aide au déplacement étant mû par au moins un moteur et dirigé par un module de contrôle de direction, selon une première vitesse de rotation et une première vitesse de translation (déterminées en fonction d'une ou plusieurs consignes reçues au moyen d'une interface d'entrée), les valeurs de vitesses constituant les coordonnées d'un point de commande dans un repère de déplacement, le dispositif d'aide au déplacement étant équipé d'au moins un dispositif capteur et d'une unité de contrôle, le dispositif capteur étant configuré pour opérer une mesure dans une direction définie par rapport à un axe de déplacement du dispositif d'aide au déplacement, la méthode comprenant :

- une mesure d'une distance entre au moins un capteur ou un point prédéterminé du dispositif d'aide au déplacement et un obstacle présent dans la direction précédemment décrite (ou dans un volume défini autour de cette direction),
- une séparation du repère normé de représentation de couples des valeurs de vitesses de translation et de vitesses de rotation en deux demi-plans par au moins une droite de séparation, l'un des deux demi-plans correspondant à un espace admissible au déplacement, l'autre des deux demi-plans correspondant à une zone d'exclusion au déplacement du dispositif d'aide au déplacement,
- une définition d'une seconde vitesse de rotation et d'une seconde vitesse de translation par projection du point de commande dans l'espace admissible ainsi déterminé, la projection du point de commande définissant alors un « point de contrôle » dans l'espace admissible de déplacement,
- un contrôle du ou des moteurs et du module de contrôle de direction en fonction, respectivement, de la seconde vitesse de translation et de la seconde vitesse de rotation (soit en fonction des coordonnées du point de contrôle défini dans l'espace admissible de déplacement).

Chacun des capteurs présents sur le dispositif d'aide au déplacement de personne est configuré pour délivrer à une unité de contrôle une ou plusieurs informations représentatives d'une distance les séparant d'un obstacle. Selon un mode de réalisation de l'invention, les dispositifs capteurs sont constitués d'un ou plusieurs émetteurs à ultrasons et d'un ou plusieurs récepteurs à ultrasons. Selon une variante, les capteurs peuvent comprendre des éléments d'émission-réception de faisceau laser ou infra-rouge, ou encore des dispositifs caméras qui, couplés par paires, sont adaptés à l'extraction (la génération) d'une information de distance ou représentative d'une distance.

La méthode de correction améliorée de trajectoire selon l'invention est utilisable quelle que soit la nature des capteurs utilisés et dès lors que ceux-ci sont adaptés pour délivrer des informations de distances entre des points prédéterminés d'un dispositif d'aide au déplacement de personnes et un ou plusieurs obstacles présents autour du dispositif, lorsque celui-ci est guidé par un utilisateur.

Selon un mode de réalisation préféré de l'invention, l'utilisateur prend place dans le dispositif d'aide au déplacement de personnes. Selon une variante l'utilisateur guide à distance le dispositif d'aide au déplacement de personnes considérant qu'un second utilisateur a pris place dans celui-ci. Dans le cas d'un guidage à distance, les moyens d'entrée des consignes de déplacement comprennent des moyens de communications sans-fil (par exemple des moyens de communication par radiofréquences tels que bien connus dans le domaine des transmissions d'informations sans-fil).

Selon un mode de réalisation de l'invention, la projection du point de commande dans l'espace admissible s'effectue par la détermination d'un point de contrôle appartenant à une droite du repère passant par l'origine du repère et par le point de commande défini par les vitesses en translation et en rotation correspondant à la ou les consignes d'entrée du dispositif.

Selon une variante du mode de réalisation de l'invention la projection du point de commande dans l'espace admissible s'effectue par la détermination d'un point de contrôle appartenant à une droite perpendiculaire à la droite de séparation la plus proche du point de commande précité.

Selon une autre variante du mode de réalisation de l'invention la projection du point de commande dans l'espace admissible s'effectue par la détermination d'un point de contrôle appartenant à une droite horizontale passant par le point de commande.

Avantageusement, préalablement ou postérieurement à la projection du point de commande, une étape de gestion de l'inertie mécanique du dispositif d'aide au déplacement comprend une étape de changement de repère du premier repère vers un second repère, le changement de repère comprenant une réduction du premier repère P par le biais d'une diminution homothétique et un décalage vers les valeurs positives des vitesses en translation de l'origine du premier repère donnant naissance à une origine du second repère.

Selon un mode de réalisation de l'invention, la projection du point de commande projeté en un point de contrôle de l'espace admissible est telle que le point de contrôle est positionné à une distance inférieure à une valeur prédéterminée d'au moins une droite de séparation. Cela revient à dire que la projection du point de commande n'est pas positionné strictement sur la droite mais à une distance définie arbitrairement à l'intérieur de l'espace admissible détouré par les droites de séparation, avec cependant une valeur maximale prédéterminée de distance à la ligne la plus proche.

Selon une variante du mode de réalisation de l'invention la correction d'une trajectoire de déplacement dans un dispositif d'aide au déplacement comprend une détermination d'au moins autant de droites de séparation que de capteurs présents sur le dispositif d'aide au déplacement.

## 4. Liste des figures.

L'invention sera mieux comprise, et d'autres particularités et avantages apparaîtront à la lecture de la description qui va suivre, la description faisant référence aux dessins annexés parmi lesquels :

- la **figure 1** représente l'architecture d'un dispositif d'aide au déplacement de personnes selon un mode de réalisation particulier et non limitatif de l'invention.

- la **figure 2** est une représentation d'un repère normé dans lequel sont définies des vitesses issues de consignes de déplacement et des vitesses déterminées par l'application de tout ou partie de la méthode selon un mode de réalisation particulier et non limitatif de l'invention.

- la **figure 3** est une représentation d'un repère normé dans lequel sont définies des vitesses issues de consignes de déplacement et des vitesses déterminées par l'application de tout ou partie de la méthode selon une première variante du mode de réalisation de l'invention.

- la **figure 4** est une représentation d'un repère normé dans lequel sont définies des vitesses issues de consignes de déplacement et des vitesses déterminées par l'application de tout ou partie de la méthode selon une seconde variante du mode de réalisation de l'invention.

## 5. Description détaillée de modes de réalisation de l'invention.

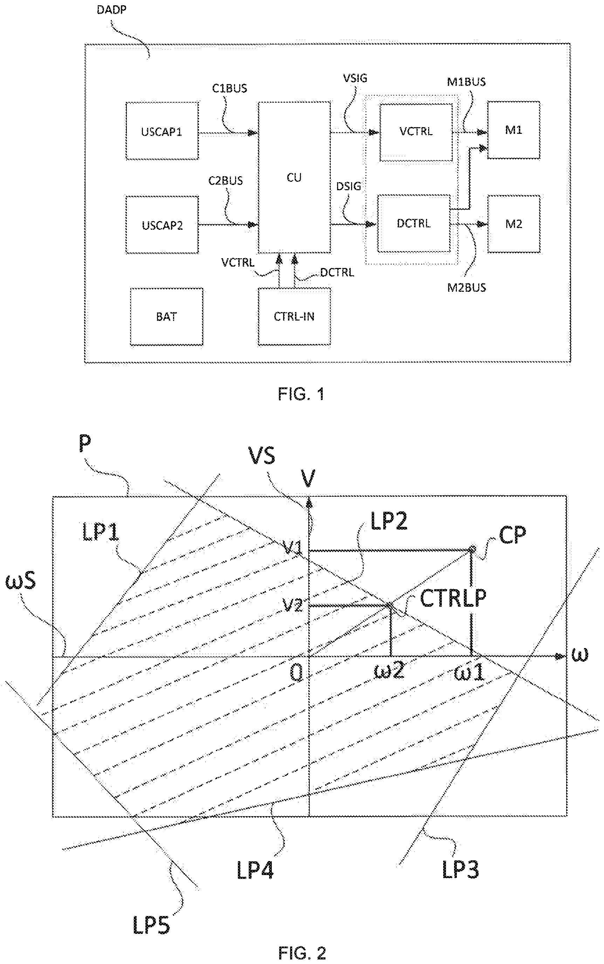

Sur la figure 1, les modules représentés sont des unités fonctionnelles, qui correspondent ou non à des unités physiquement distinguables. Par exemple, ces modules ou certains d'entre eux sont regroupés dans un unique composant. *A contrario,* selon d'autres modes de réalisation, certains modules sont composés d'entités physiques séparées.

La **figure 1** illustre des éléments d'architecture d'un dispositif d'aide au déplacement de personnes selon un mode de réalisation particulier et non limitatif de l'invention. Le dispositif DADP comprend au moins un moteur de propulsion, ou un ensemble de moteurs de propulsion représenté par le module fonctionnel M1. Selon un premier mode de réalisation, le dispositif DADP comprend également un second moteur M2 permettant de définir la direction de déplacement. Les moteurs de propulsion et de guidage en direction sont respectivement contrôlés par un module de contrôle de vitesse VCTRL et un module de contrôle en direction DCTRL. Selon un second mode de réalisation, le contrôle en direction est effectué en modulant la vitesse de deux moteurs de propulsion respectivement associés à une roue gauche RG et une roue droite RD, de sorte que tout en contrôlant une vitesse moyenne déterminée, une direction de déplacement soit définie par différence entre les vitesses respectives de la roue gauche et de la roue droite, selon un mode différentiel. Les modules de contrôle de vitesse et de direction VCTRL et DCTRL transmettent des signaux de contrôles aux éléments des modules fonctionnels M1 et M2. M1 comprend le ou les moteurs de propulsion et M2 comprend un moteur de guidage en direction, le cas échéant, selon le mode de réalisation.

Les modules VCTRL et DCTRL sont contrôlés par l'unité de contrôle CU qui détermine des signaux VSIG et DISG, définis à partir des informations V3 et $\omega$3. V3 étant définie à partir d'une fusion de vitesses de translation V1 et V2, $\omega$3 étant définie à partir de la fusion de vitesses de rotation $\omega$1 et $\omega$2.

V1 et $\omega$1 représentent respectivement des informations représentatives d'une vitesse en translation et d'une vitesse en rotation reçues par l'unité de contrôle CU selon une consigne utilisateur établie par l'intermédiaire du module CTRL-IN comprenant une manette de contrôle, par exemple.

L'unité de contrôle CU reçoit des informations VCTRL et DCTRL de consignes de vitesse et de déplacement depuis l'interface utilisateur CTRL-IN du dispositif DADP. Les différents traitements opérés par l'unité de contrôle CU sont réalisés notamment à partir des informations produites par un ou plusieurs capteurs USCAP disposés sur le dispositif d'aide au déplacement DADP et par les informations de consignes de déplacement émises par un utilisateur.

Les capteurs USCAP1 et USCAP2 sont des capteurs adaptés à délivrer des signaux représentatifs de l'environnement perçu (dans des directions respectivement prédéfinies par rapport à la direction de déplacement) sur des bus numériques C1BUS et C2BUS, configurés pour le transfert des informations de distances avec un ou plusieurs obstacles dans une mémoire de traitement de l'unité de contrôle CU.

Tous les modules sont alimentés en énergie par un module accumulateur d'énergie BAT, rechargeable à partir d'une prise secteur. L'unité de contrôle CU comprend des modules CU1, CU2 et CU3. Le module CU1 est un module de détermination de vitesses de consignes et de vitesses corrigées d'un repère P de référence représentatif de couples de valeur de vitesses de translation et de vitesse de rotation. CU2 est un module de définition d'une vitesse de rotation $\omega$3 et d'une vitesse de translation V3, en fonction des informations reçues par le ou les capteurs (USCAP) et de valeurs de vitesse corrigée par la méthode de correction selon un mode de réalisation de l'invention. CU3 est une unité de contrôle adaptée à contrôler le moteur ou les moteurs (bloc fonctionnel M1) de déplacement et le module de contrôle de direction en fonction, respectivement, d'une troisième vitesse de translation V3 et d'une la vitesse de rotation $\omega$3. Selon un mode de réalisation de l'invention, V3 et $\omega$3 sont respectivement égales à V2 et $\omega$2. Selon une variante, V3 et $\omega$3 sont calculées pour tenir compte de l'inertie mécanique propre au dispositif de déplacement de personnes transportant un utilisateur.

Selon un mode de réalisation particulier et non limitatif de l'invention, les modules unités de contrôle cités comprennent l'ensemble des éléments d'architecture classique d'une unité de contrôle, tel qu'un ou plusieurs microcontrôleurs, une ou plusieurs mémoires de travail (mémoire vive) volatiles, une ou plusieurs mémoires de stockage non volatiles, des bus de communication de données, un ou plusieurs circuits tampon (« buffer » en anglais), un circuit de remise à zéro (reset), des circuits d'alimentation électrique et de supervision d'alimentation, un ou plusieurs circuits d'horloge, ainsi que toute autre fonction classiquement utile à la mise en oeuvre de fonctions de contrôle. L'architecture de chacun de ces modules n'est pas détaillée plus encore ici, n'étant pas utile à la compréhension de l'invention.

Selon un mode de réalisation particulier et non limitatif de l'invention, l'unité de contrôle CU opère une représentation d'une vitesse en translation et d'une vitesse en rotation telle que définies par le biais de l'interface d'entrée de type manette du dispositif d'aide au déplacement de personnes dans un repère normé

P ($\omega$,$v$) dont :

- l'axe des abscisses $\omega$S représente des valeurs $\omega$ de vitesse de rotation et
- l'axe des ordonnées Vs représente des valeurs $v$ (ou V) de vitesse en translation.

Les valeurs de vitesses en translations s'écrivent indifféremment $v$ ou V dans les paragraphes qui suivent. Ainsi, et à titre d'exemple, l'écrite $v$1 correspond à une valeur discrète V1 de la grandeur $v$ qui représente la valeur instantanée de la vitesse en translation du dispositif DADP.

Les distances mesurées entre les capteurs USCAP1 et USCAP2 permettent la définition de deux droites LP1 et LP2 séparant l'espace global du repère P

($\omega$,$v$) en respectivement deux demi-plans pour chacune de ces droites et définissant de fait, un espace interdit et un espace de déplacement admissible. Des vitesses corrigées sont alors définies dans le repère P ($\omega$,$v$), par projection d'un point de commande CP l'espace interdit en un point de contrôle CTRLP de l'espace admissible précédemment défini dans le repère P ($\omega$,$v$).

L'utilisation des capteurs USCAP indiquant une distance par rapport à un obstacle permet également de connaître l'orientation de l'obstacle, et notamment, lorsque les capteurs USCAP comprennent une pluralité d'éléments émetteurs et/ou récepteurs ou encore lorsqu'ils sont couplés entre eux de façon à identifier un signal émis par une pluralité de récepteur. Ainsi, et dans le cas d'un mur par exemple, il est possible d'effectuer une mesure en deux ou plus de points de l'obstacle, et de déterminer son orientation dans l'espace.

Selon une variante du mode de réalisation, des limites (lignes droites) verticales et horizontales délimitent l'espace admissible de déplacement en correspondance des limites maximales de consignes en entrée (limites du déplacement souhaité et exprimé par l'intermédiaire de la commande d'entrée au moyen de la « manette » d'interface d'entrée.)

La détermination de la ou des droites de séparation du repère P, lequel correspond à un plan ($\omega$, V), en demi-plans, est réalisée par l'unité de contrôle en fonction notamment des informations représentatives de la distances aux obstacles, transmises par le ou les capteurs USCAP (USCAP1, USCAP2, ... USCAPn)

Une équation d'une droite de séparation du repère P (dans le plan ($\omega$, V)) est, selon l'invention est :

$$J_v \, v + J_\omega \, \omega \leq \lambda \, (\text{s-s*})$$

C'est donc une équation d'un demi-plan du repère P participant à la définition de l'espace de déplacement admissible MA dans P, et défini par au moins une mesure d'une distance s à un obstacle, où :

- $v$ est la vitesse instantanée en translation du dispositif DADP, aussi appelée V,
- $\omega$ est la vitesse instantanée en rotation du dispositif DADP,
- $\lambda$ est une constante,
- s est la distance mesurée à l'obstacle et
- s* est la distance minimale à l'obstacle, encore appelée position limite du capteur.
- $J_v$ et $J_\omega$ sont des composantes scalaires respectivement définies à partir des vitesses $c_v$ et $c_\omega$ du capteur correspondant dans le repère ($\omega$,$v$):

$$J_v = L_s \, T_v$$

$$J_\omega = L_s \, T_\omega$$

Où $L_s$ est une matrice d'interaction dépendante du capteur (propre au capteur et caractérisée lors d'une phase de conception de celui-ci).

$T_v$ et $T_\omega$ sont des éléments matriciels permettant de définir les vitesses en translation $c_v$ et en rotation $c_\omega$ d'un capteur donné du dispositif DADP en fonction des vitesses en translation V et en rotation $\omega$ du dispositif complet DADP (par exemple référencé par son centre de gravité).

Les vitesses en translation et en rotation d'un capteur sont définies selon la formule :

$$\begin{bmatrix} c_v \\ c_\omega \end{bmatrix} = T_v \, T_\omega \begin{bmatrix} V \\ \omega \end{bmatrix}$$

$T_v$ et $T_\omega$ représentent des éléments matriciels propres au dispositif d'aide au déplacement de personnes DADP et caractérisés lors d'une phase de conception de celui-ci.

$L_s$ est la matrice d'interaction d'un capteur ; $c_v$ et $c_\omega$ sont respectivement les vitesses en translation et en rotation du capteur dans le repère ($\omega$,$v$).

La formule suivante caractérise la variation de la distance à un obstacle pour un capteur donné et considérant le déplacement de ce capteur :

$$\dot{s} = \mathbf{L}_s \begin{bmatrix} c_v \\ c_\omega \end{bmatrix}$$

Selon un mode de réalisation de l'invention, l'inertie est gérée en mixant la valeur courante déterminée d'une vitesse avec sa valeur précédente. Cette pondération se fait selon un calcul correspondant à l'implémentation d'un filtre passe-bas.

Selon un mode de réalisation de l'invention, les déterminations des vitesses en translation et en rotation du dispositif d'aide au déplacement des personnes sont paramétrables, afin de privilégier notamment un déplacement fluide ou un déplacement de nature à mettre en confiance un utilisateur.

La définition des paramètres pourra se faire par tout moyen d'entrée associé à l'unité de contrôle du dispositif DADP, tel que, par exemple, des micro-interrupteurs de configuration, la connexion d'une console adaptée à la configuration, etc. Ainsi, la configuration du comportement du dispositif, par le biais de la correction de trajectoire, est rendue accessible à un personnel formé pour ce faire, tel que par exemple un ergothérapeute, un assistant médical, ou un professionnel de la vente de ce type d'équipement.

Selon un mode de réalisation préféré, et considérant la configuration classique d'un dispositif d'aide au déplacement des personnes au moment de l'invention, le dispositif DADP comprend une quinzaine de capteurs USCAP susceptibles de comprendre chacun un ou plusieurs émetteurs et un ou plusieurs récepteurs.

Selon des variantes, le dispositif peut comprendre un nombre de capteurs inférieur ou supérieur à 15.

V1, V2, V3 sont des valeurs discrètes de la grandeur vitesse en translation V du dispositif DADP dans le repère v, ω (le repère P),

ω1, ω2, ω3 sont des valeurs discrètes de la grandeur vitesse en rotation ω du dispositif DADP dans le repère v, ω (le repère P).

La **figure 2** est une représentation d'un repère normé P dans lequel sont définies des vitesses V1 et ω1 issues de consignes de déplacement et des vitesses V2 et ω2 déterminées par l'application de tout ou partie de la méthode selon un mode de réalisation particulier et non limitatif de l'invention. V1 et ω1 sont définies à partir d'informations (signaux) VCTRL et DCTRL émis par le module interface d'entrée CTRL-IN du dispositif d'aide au déplacement de personnes. V1 représente la vitesse en translation du dispositif DADP sollicitée par la consigne d'entrée et ω1 représente la vitesse en rotation du dispositif DADP sollicitée par la consigne d'entrée. V1 et ω1 sont donc définies à partir de la position d'une manette de commande du dispositif DADP et le couple de valeurs (V1, ω1) constitue les coordonnées d'un point de commande CP dans le repère normé P.

Selon le mode de réalisation préféré de l'invention, une vitesse V1 positive correspond au déplacement en avant du dispositif DADP et une vitesse V1 négative correspond au déplacement en arrière (marche arrière) du dispositif DADP. Selon une convention similaire, une vitesse ω1 positive correspond à un virage à gauche (lorsque V1 est positive) et une vitesse ω1 négative correspond à un virage à droite (lorsque V1 est positive). Une vitesse V1 nulle simultanément à une vitesse ω1 nulle correspond à un immobilisme du dispositif DADP. Le repère P, normé, est défini par les axes ωS et VS, respectivement indicateurs de grandeurs ω de vitesse de rotation et V de vitesse de translation. Chacun des capteurs USCAP1, USCAP2, USCAPn , constitués d'un ou plusieurs éléments émetteurs et/ou un ou plusieurs éléments récepteurs, délivre à l'unité de contrôle UC du dispositif d'aide au déplacement DADP une information de distance par rapport à un éventuel obstacle présent de la champ de détection autour du dispositif DADP. Avantageusement, lorsqu'un obstacle est détecté, le repère normé P est séparé en deux demi-plans (en fonction notamment de la distance à l'obstacle mesurée) : l'un est interdit en termes de déplacement et l'autre est autorisé en termes de déplacement. Par exemple, le capteur USCAP 1 permet de définir la ligne de séparation LP1 du repère P en utilisant une formule de calcul prédéfinie.

L'orientation de la ligne dans le repère normé P dépend (entre autres) de la position et de l'orientation du capteur USCAP1 sur le dispositif d'aide au déplacement DADP. Il en est de même pour le capteur USCAP2 qui, selon le même principe, permet de définir la ligne LP2 de séparation du repère normé P en deux demi-plans. L'un étant autorisé pour le déplacement, l'autre étant interdit. La définition des lignes LP1, LP2, LPn, qui s'opère de façon dynamique lors du cheminement du dispositif DADP sur un itinéraire théorique défini par l'évolution de la consigne de déplacement (par la manette d'entrée) permet la définition dynamique d'un espace de déplacement dit admissible. Astucieusement, la correction améliorée de trajectoire selon l'invention s'appuie sur la projection du point de commande CP dans l'espace admissible MA de déplacement délimité par une ou une pluralité de droites de séparation LP (LP1, LP2, ... LPn).

Selon une première variante, la projection du point de commande CP dans l'espace admissible se fait par définition d'un point de contrôle CTRLP appartenant à une droite passant par l'origine du repère P et par le point de commande CP, défini par la consigne d'entrée. Selon une seconde variante, le point de contrôle CTRLP est défini par projection orthogonale du point de commande CP sur la droite LP la plus proche du point de commande CP. Selon une autre variante, une projection horizontale ou sensiblement horizontale du point de commande CP est utilisée pour maintenir au maximum la vitesse en translation du dispositif DADP.

Les vitesses V2 et ω2 correspondant à une trajectoire corrigée sont les coordonnées (valeur de V et valeur de w) dans l'espace admissible du repère normé P, du point de contrôle CTRLP défini par projection du point de commande CP.

Astucieusement, chacune des variantes permet une meilleure adaptation d'un utilisateur du dispositif DADP d'aide au déplacement de personnes selon son profil pathologique, le cas échéant. La variante utilisée a une incidence directe sur la réactivité, la souplesse et l'assurance ressenties subjectivement par un utilisateur du dispositif DADP. En outre, une gestion de l'inertie est opérée notamment par un décalage des valeurs de vitesse V et ω dans le repère P. Cette translation peut être réalisée par un calibrage et en fonction de caractéristiques propres au dispositif DADP et/ou à un utilisateur de ce dernier. Ainsi, et selon un mode de réalisation particulier de l'invention, une vitesse en translation V3 et une vitesse en rotation ω3 sont définies en vue d'être communiquées aux modules de contrôle VCTRL et DCTRL du dispositif DADP. En l'absence de gestion de l'inertie, ce sont les vitesses V2 et ω2 qui sont transmises sur les bus VSIG et DSIG.

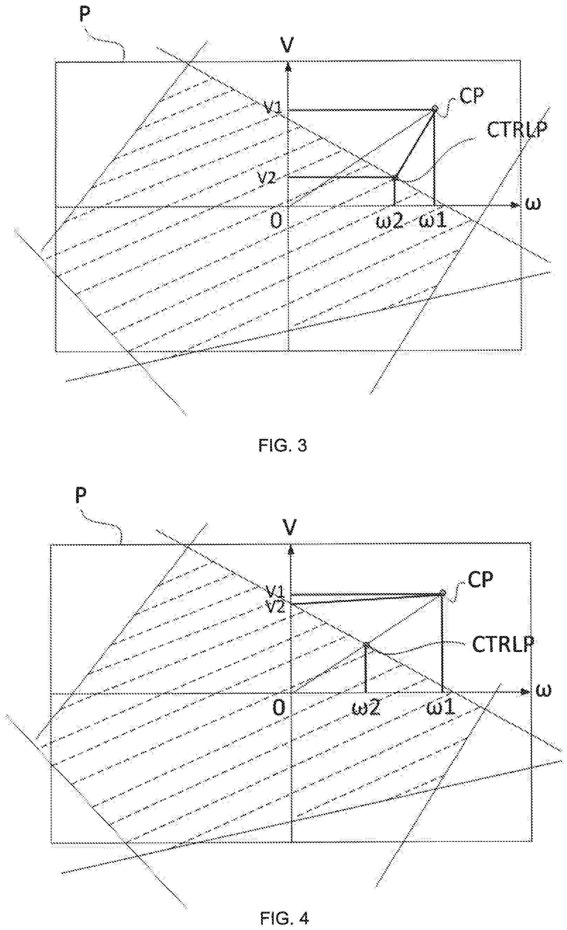

La **figure 3** est une représentation d'un repère normé P dans lequel sont définies des vitesses V2 et ω2 par projection du point de commande CP en un point de contrôle PCTRL situé dans l'espace de déplacement admissible et sur une droite perpendiculaire à la droite de séparation la plus proche de CP, selon une variante du mode de réalisation de l'invention.

La **figure 4** est une représentation du repère normé P dans lequel sont définies des vitesses V2 et $\omega 2$ par projection du point de commande CP en un point de contrôle PCTRL situé dans l'espace de déplacement admissible et sur une droite passant par l'origine du repère P. Cependant, et selon une variante du mode de réalisation de l'invention, la vitesse déterminée V2 et la plus grande vitesse en translation possible dans l'espace de déplacement admissible et inférieure ou égale à la vitesse de consigne V1 du point de commande CP.

Bien évidemment d'autre variantes de définition des vitesses V2 et $\omega 2$ sont possibles dans l'espace admissible de déplacement. La détermination de ces vitesses à l'intérieur de l'espace de déplacement ne se limite pas aux seules variantes du mode de réalisation décrites ici.

Avantageusement, l'unité de contrôle UC délivre sur un port de communication, et en vue d'en effectuer un stockage dans une mémoire associée, par exemple, une succession d'informations représentatives des corrections apportées à la trajectoire. L'unité de contrôle UC indique par ce biais la position des capteurs ayant détecté un obstacle (ou une identification du capteur, la distance avec l'obstacle, la position de la consigne au moment de la détection de l'obstacle, etc.) aux fins de réaliser une analyse statistique ou une synthèse de l'aide technique (correction) apportée à l'utilisateur de dispositif DADP. Par ce biais, il est possible d'analyser le comportement d'un utilisateur et de réaliser une adaptation d'un ou plusieurs paramètres de contrôle du dispositif DADP en fonction du comportement observé. Le comportement d'un utilisateur est pratiquement lié à la pathologie et/ou à la nature des traumatismes subis par un utilisateur. Par exemple, un utilisateur sujet à une héminégligence peut ne pas avoir de conscience de tout ce qui correspond à un côté. Il pourra se situer et raisonner quant à des déplacements sur la droite, à titre d'exemple, mais pas sur la gauche. La correction sera donc naturellement plus fréquente lors de déplacements se dirigeant par divergence vers la gauche (puisque c'est le côté non maîtrisé) ou si un obstacle est présent sur le côté gauche par rapport à une trajectoire souhaitable (parce qu'il ne sera pas vu).

Avantageusement, l'implémentation de la méthode de correction de trajectoire selon l'invention permet l'amélioration des trajectoires de déplacement tout en disposant d'une basse complexité calculatoire, d'une architecture basse consommation (ce qui confère une meilleure autonomie au dispositif DADP), d'une grande rapidité d'exécution, d'une latence faible, d'une facilité d'industrialisation.

En outre, l'implémentation de la méthode selon l'invention permet une modularité et une flexibilité nouvelle puisque différents paramétrages possibles rendent le dispositif d'aide au déplacement DADP adaptable au profil d'un utilisateur.

Ainsi, le mode de projection dans l'espace admissible réalisé dépend de ce paramétrage qui est, par exemple, un profil pathologique et/ou psychique d'un utilisateur.

L'invention concerne également toute méthode de correction de trajectoire dans un dispositif d'aide au déplacement basée sur une détermination de la présence d'un ou plusieurs obstacles au moyen de capteurs, la méthode déterminant une vitesse de translation et une vitesse de rotation à partir d'une ou plusieurs droites de séparation d'un repère P normé en un espace interdit de déplacement et un espace de déplacement admissible, lequel repère est une référence représentative de l'environnement perçu dans une direction de déplacement, les vitesses ainsi déterminées étant utilisées respectivement fusionnées avec des consignes de vitesse et de direction saisies par un utilisateur du dispositif d'aide au déplacement au moyen d'une interface utilisateur adaptée à le contrôler. L'invention concerne également tout dispositif d'aide au déplacement mettant en oeuvre une telle méthode. Enfin, l'invention concerne tout produit programme d'ordinateur mettant en oeuvre les étapes de la méthode selon un mode de réalisation particulier et non limitatif de l'invention.

L'invention concerne ainsi toute méthode de correction de trajectoire dans un dispositif d'aide au déplacement basée sur une mesure de distance entre au moins un capteur USCAP et un obstacle, une séparation d'un repère P de représentation de couples $C_{V1\omega 1}$ de valeurs de vitesses de translation V1 et de vitesses de rotation $\omega 1$ en deux demi-plans, par au moins une limite de séparation LP d'un repère P normé, en une zone d'exclusion et un espace admissible MA de déplacement, éventuellement délimité en outre par des limites de consigne en entrée, une définition d'une seconde vitesse de rotation $\omega 2$ et d'une seconde vitesse de translation V2 par projection d'un point de commande CP dans l'espace admissible MA délimité du repère normé P.

## Revendications

1. Méthode de correction d'une trajectoire de déplacement dans un dispositif (DADP) d'aide au déplacement d'au moins une personne, ledit dispositif (DADP) d'aide au déplacement étant mû par au moins un moteur (M1) et dirigé par un module de contrôle de direction (DCTRL), selon une première vitesse de rotation ($\omega 1$) et une première vitesse de translation (V1) déterminées en fonction d'une ou plusieurs consignes (DCTRL, VCTRL) reçues au moyen d'une interface (CTRL-IN) d'entrée, lesdites valeurs de vitesses (V1, $\omega 1$) constituant les coordonnées d'un point de commande (CP) dans un repère de déplacement (P), ledit dispositif (DADP) d'aide au déplacement étant équipé d'au moins un dispositif capteur (USCAP) et d'une unité de contrôle (UC), ledit dispositif capteur (USCAP) étant configuré pour opérer une mesure dans une direction (D0) définie par rapport à l'axe de déplacement dudit dispositif (DADP) d'aide au déplacement, ladite méthode comprenant une mesure d'une distance (s) entre ledit au moins un capteur (USCAP) ou un point prédéterminé dudit dispositif d'aide au déplacement (DADP) et un obstacle présent dans ladite direction (DO), et ladite méthode étant **caractérisée en ce qu'**elle comprend :

- une séparation, en fonction notamment de ladite distance (s) mesurée, dudit repère (P) de représentation de couples ($C_{V1\omega1}$) desdites valeurs de vitesses de translation (V1) et de vitesse de rotation ($\omega$1) en demi-plans par au moins une droite de séparation (LP), l'un desdits demi-plans dudit repère (P) correspondant à un espace admissible au déplacement, (MA), l'autre desdits deux demi-plans correspondant à un une zone d'exclusion au déplacement dudit dispositif (DADP) d'aide au déplacement,
- une détermination d'une seconde vitesse de rotation ($\omega$2) et d'une seconde vitesse de translation(V2) par projection dudit point de commande (CP) dans ledit espace admissible (MA)
- un contrôle du ou desdits moteur (M1) et dudit module de contrôle de direction (DCTRL) en fonction, respectivement, de ladite seconde vitesse de translation (V2) et de la seconde vitesse de rotation ($\omega$2) précédemment déterminées, ladite au moins une droite de séparation étant définie par l'équation :

$$J_v\, v + J_\omega\, \omega \leq \lambda\, (\text{s-s*})$$

où

$v$ est une vitesse instantanée en translation dudit dispositif (DADP),
$\omega$ est une vitesse instantanée en rotation dudit dispositif (DADP),
$\lambda$ est une constante,
s est ladite distance mesurée, et
s* est une distance minimale à l'obstacle, et $J_v$ et $J_\omega$ sont des composantes scalaires respectivement définies à partir des vitesses $c_v$ et $c_\omega$ du capteur correspondant dans le repère ($\omega$,v).

2. Méthode de correction d'une trajectoire de déplacement dans un dispositif (DADP) d'aide au déplacement selon la revendication 1, **caractérisée en ce que** ladite projection dudit point de commande (CP) dans ledit espace admissible (MA) s'effectue par la détermination d'un point de contrôle (CTRLP) appartenant à une droite du repère (P) passant par l'origine du repère et par le dit point de commande (CP).

3. Méthode de correction d'une trajectoire de déplacement dans un dispositif (DADP) d'aide au déplacement selon la revendication 1, **caractérisée en ce que** ladite projection dudit point de commande (CP) dans ledit espace admissible (MA) s'effectue par la détermination d'un point de contrôle (CTRLP) appartenant à une droite perpendiculaire à ladite au moins une droite de séparation LP la plus proche dudit point de commande (CP).

4. Méthode de correction d'une trajectoire de déplacement dans un dispositif (DADP) d'aide au déplacement selon la revendication 1 **caractérisée en ce que** ladite projection dudit point de commande (CP) dans ledit espace admissible (MA) s'effectue par la détermination d'un point de contrôle (CTRLP) appartenant à une droite horizontale passant par ledit point de commande (CP).

5. Méthode de correction d'une trajectoire de déplacement dans un dispositif (DADP) d'aide au déplacement selon l'une quelconque des revendications précédentes **caractérisée en ce qu'**elle comprend en outre, préalablement à ladite projection dudit point de commande (CP), une étape de gestion de l'inertie mécanique dudit dispositif (DADP) comprenant un changement de repère dudit premier repère (P) vers un second repère (P'), ledit changement de repère comprenant une réduction dudit premier repère P par le biais d'une diminution homothétique et un décalage vers les valeurs positives des vitesses en translation (V1) de l'origine dudit premier repère (P) donnant naissance à une origine dudit second repère (P').

6. Méthode de correction d'une trajectoire de déplacement dans un dispositif (DADP) d'aide au déplacement selon la revendication 1 **caractérisée en ce que** ladite projection dudit point de commande (CP) projeté en un point de contrôle (CTRLP) de l'espace admissible (MA) est telle que ledit point de contrôle (CTRLP) est positionné a une distance inférieure à une valeur prédéterminée (L) de ladite au moins une droite de séparation (LP).

7. Méthode de correction d'une trajectoire de déplacement dans un dispositif (DADP) d'aide au déplacement selon la revendication 1 **caractérisée en ce qu'**elle comprend une détermination d'au moins autant de droites de séparation (LP) que de capteurs (USCAP) présents sur ledit dispositif d'aide au déplacement (DADP).

8. Produit programme d'ordinateur, **caractérisé en ce qu'**il comprend des instructions de code de programme pour exécuter les étapes de la méthode selon l'une quelconque des revendications 1 à 7, lorsque ledit programme est exécuté sur un ordinateur.

**Patentansprüche**

1. Verfahren zur Korrektur einer Verlagerungsbahn in einer Verlagerungshilfsvorrichtung (DADP) mindestens einer Person, wobei die Verlagerungshilfsvorrichtung (DADP) von mindestens einem Motor (M1) bewegt und von einem Richtungskontrollmodul (DCTRL) gemäß einer ersten Rotationsgeschwindigkeit (1) und einer ersten Translationsgeschwindigkeit (V1) gelenkt wird, die in Abhängigkeit von einem oder mehreren Sollwerten (DCTRL, VCTRL) bestimmt werden, die mittels einer Eingangsschnittstelle (CTRL-IN) empfangen werden, wobei die Geschwindigkeitswerte (V1, 1) die Koordinaten eines Steuerpunkts (CP) in einem Verlagerungsbezugssystem (P) bilden, wobei die Verlagerungshilfsvorrichtung (DADP) mit mindestens einem Sensormittel (USCAP) und einer Steuereinheit (UC) ausgestattet ist, wobei das Sensormittel (USCAP) konfiguriert ist, um eine Messung in einer Richtung (D0) durchzuführen, die in Bezug auf die Verlagerungsachse der Verlagerungshilfsvorrichtung (DADP) festgelegt ist, wobei das Verfahren eine Messung eines Abstands (s) zwischen dem mindestens einen Sensor (USCAP) oder einem vorher bestimmten Punkt der Verlagerungshilfsvorrichtung (DADP) und einem Hindernis umfasst, das in der Richtung (D0) vorhanden ist, und wobei das Verfahren **dadurch gekennzeichnet ist, dass** es umfasst:

    - eine Trennung, in Abhängigkeit insbesondere von dem gemessenen Abstand (s), des Darstellungsbezugssystems (P) von Paaren ($C_{V1\ 1}$) der Translationsgeschwindigkeits- (V1) und Rotationsgeschwindigkeitswerte (1) in Halbebenen durch mindestens eine Trennungsgerade (LP), wobei eine der Halbebenen des Bezugssystems (P) einem Raum entspricht, in dem Verlagerung zulässig ist, (MA), wobei die andere der zwei Halbebenen einer Zone entspricht, in der Verlagerung der Verlagerungshilfsvorrichtung (DADP) ausgeschlossen ist,
    - eine Bestimmung einer zweiten Rotationsgeschwindigkeit (2) und einer zweiten Translationsgeschwindigkeit (V2) durch Projektion des Steuerpunkts (CP) in den zulässigen Raum (MA),
    - eine Steuerung des oder der Motoren (M1) und des Richtungskontrollmoduls (DCTRL) jeweils in Abhängigkeit von der zweiten Translationsgeschwindigkeit (V2) und von der zweiten Rotationsgeschwindigkeit (2), die vorher bestimmt wurden,
    wobei mindestens eine Trennungsgerade festgelegt ist durch die Gleichung:

$$J_V\ +\ J\ \leq\ (s-s^*)$$

wobei

  eine momentane Translationsgeschwindigkeit der Vorrichtung (DADP) ist,
  eine momentane Rotationsgeschwindigkeit der Vorrichtung (DADP) ist,
  eine Konstante ist,

    s der gemessene Abstand ist, und
    s* ein Mindestabstand zum Hindernis ist,
    $J_V$ und J skalare Komponenten sind, die jeweils auf der Basis der Geschwindigkeiten $c_V$ und c des entsprechenden Sensors in dem Bezugssystem (,) festgelegt sind.

2. Verfahren zur Korrektur einer Verlagerungsbahn in einer Verlagerungshilfsvorrichtung (DADP) nach Anspruch 1, **dadurch gekennzeichnet, dass** die Projektion des Steuerpunkts (CP) in den zulässigen Raum (MA) durch die Bestimmung eines Kontrollpunkts (CTRLP) erfolgt, der zu einer Geraden des Bezugssystems (P) gehört, die durch den Nullpunkt des Bezugssystems und durch den Steuerpunkt (CP) verläuft.

3. Verfahren zur Korrektur einer Verlagerungsbahn in einer Verlagerungshilfsvorrichtung (DADP) nach Anspruch 1, **dadurch gekennzeichnet, dass** die Projektion des Steuerpunkts (CP) in den zulässigen Raum (MA) durch die Bestimmung eines Kontrollpunkts (CTRLP) erfolgt, der zu einer Geraden gehört, die senkrecht zu der mindestens einen Trennungsgeraden LP ist, die dem Steuerpunkt (CP) am nächsten ist.

4. Verfahren zur Korrektur einer Verlagerungsbahn in einer Verlagerungshilfsvorrichtung (DADP) nach Anspruch 1, **dadurch gekennzeichnet, dass** die Projektion des Steuerpunkts (CP) in den zulässigen Raum (MA) durch die Bestimmung eines Kontrollpunkts (CTRLP) erfolgt, der zu einer horizontalen Geraden gehört, die durch den Steuerpunkt (CP) verläuft.

5. Verfahren zur Korrektur einer Verlagerungsbahn in einer Verlagerungshilfsvorrichtung (DADP) nach einem der vorangehenden Ansprüche, **dadurch gekennzeichnet, dass** sie ferner vor der Projektion des Steuerpunkts (CP) einen Verwaltungsschritt der mechanischen Trägheit der Vorrichtung (DADP) umfasst, umfassend eine Bezugssystemänderung des ersten Bezugssystems (P) zu einem zweiten Bezugssystem ('), wobei die Bezugssystemänderung eine Reduzierung des ersten Bezugssystems (P) über eine homothetische Verkleinerung und eine Verschiebung zu positiven Werten der Translationsgeschwindigkeiten (V1) des Nullpunkts des ersten Bezugssystems (P) umfasst, woraus ein Nullpunkt des zweiten Bezugssystems (') entsteht.

6. Verfahren zur Korrektur einer Verlagerungsbahn in einer Verlagerungshilfsvorrichtung (DADP) nach Anspruch 1, **dadurch gekennzeichnet, dass** die Projektion des in einen Kontrollpunkt (CTRLP) des zulässigen Raums (MA) projizierten Steuerpunkts (CP) derart ist, dass der Kontrollpunkt (CTRLP) in einem Abstand positioniert ist, der kleiner als ein vorher festgelegter Wert (L) der mindestens einen Trennungsgeraden (LP) ist.

7. Verfahren zur Korrektur einer Verlagerungsbahn in einer Verlagerungshilfsvorrichtung (DADP) nach Anspruch 1, **dadurch gekennzeichnet, dass** es eine Bestimmung von mindestens ebenso vielen Trennungsgeraden (LP) wie Sensoren (USCAP) umfasst, die auf der Verlagerungshilfsvorrichtung (DADP) vorhanden sind.

8. Rechnerprogrammprodukt, **dadurch gekennzeichnet, dass** es Programmcodebefehle zur Ausführung der Schritte des Verfahrens nach einem der Ansprüche 1 bis 7 umfasst, wenn das Programm auf einem Rechner ausgeführt wird.

**Claims**

1. Method for correcting a movement trajectory in a movement assistance device (DADP) for at least one person, said movement assistance device (DADP) being driven by at least one motor (M1) and directed by a steering control module (DCTRL), according to a first rotational speed (1) and a first translational speed (V1), which are determined according to one or more directives (DCTRL, VCTRL) received by means of an input interface (CTRL-IN), said speed values (V1, 1) constituting the coordinates of a command point (CP) in a movement coordinate system (P), said movement assistance device (DADP) being equipped with at least one sensor device (USCAP) and a control unit (CU), said sensor device (USCAP) being configured such that it performs a measurement in a defined direction (D0) relative to the movement axis of said movement assistance device (DADP), said method comprising a step of measuring a distance (s) between said at least one sensor (USCAP) or a predetermined point of said movement assistance device (DADP) and an obstacle present in said direction (D0), and said method being **characterised in that** it comprises the steps of:

- separating, in particular according to said distance (s) measured, said coordinate system (P), representing pairs ($C_{V11}$) of said values of translational speeds (V1) and rotational speeds (1) into half-planes, using at least one separating straight line (LP), one of said half-planes of said coordinate system (P) corresponding to a permissible travel space (MA), the other of said two half-planes corresponding to a travel exclusion zone of said movement assistance device (DADP),
- determining a second rotational speed (2) and a second translational speed (V2) by projecting said command point (CP) into said permissible space (MA),
- controlling said one or more motors (M1) and said steering control module (DCTRL), respectively as a function of said second translational speed (V2) and said second rotational speed (2) previously determined, said at least one separating straight line being defined by the equation:

$$J_v v + J \omega \leq (s - s^*)$$

where:

$v$ is an instantaneous translational speed of said device (DADP),
$\omega$ is an instantaneous rotational speed of said device (DADP),
is a constant,
$s$ is said distance measured, and
$s^*$ is a minimum distance measured to the obstacle, and
$J_v$ and $J$ are scalar components respectively derived from the speeds $c_v$ and $c$ of the corresponding sensor in the coordinate system (, v).

2. Method for correcting a movement trajectory in a movement assistance device (DADP) according to claim 1, **characterised in that** said projection of said command point (CP) into said permissible space (MA) is carried out by determining a control point (CTRLP) falling within a straight line of the coordinate system (P) passing through the origin of the coordinate system and through said command point (CP).

3. Method for correcting a movement trajectory in a movement assistance device (DADP) according to claim 1, **characterised in that** said projection of said command point (CP) into said permissible space (MA) is carried out by determining a control point (CTRLP) falling within a straight line that is perpendicular to said at least one separating straight line LP the closest to said command point (CP).

4.  Method for correcting a movement trajectory in a movement assistance device (DADP) according to claim 1, **characterised in that** said projection of said command point (CP) into said permissible space (MA) is carried out by determining a control point (CTRLP) falling within a horizontal straight line passing through said command point (CP).

5.  Method for correcting a movement trajectory in a movement assistance device (DADP) according to any of the previous claims, **characterised in that** it further comprises, before said projection of said command point (CP), a step of managing the mechanical inertia of said device (DADP) comprising changing the coordinate system from said first coordinate system (P) to a second coordinate system (P'), said change in coordinate system including a reduction of said first coordinate system (P) by means of a scale reduction and a shift towards the positive values of the translational speeds (V1) of the origin of said first coordinate system (P) giving rise to an origin of said second coordinate system (P').

6.  Method for correcting a movement trajectory in a movement assistance device (DADP) according to claim 1, **characterised in that** said projection of said projected command point (CP) into a control point (CTRLP) of the permissible space (MA) is such that said control point (CTRLP) is positioned at a distance that is less than a predetermined value (L) of said at least one separating straight line (LP).

7.  Method for correcting a movement trajectory in a movement assistance device (DADP) according to claim 1, **characterised in that** it comprises determining at least as many separating straight lines (LP) as there are sensors (USCAP) present on said movement assistance device (DADP).

8.  Computer program product, **characterised in that** it comprises program code instructions for carrying out the steps of the method according to any of claims 1 to 7, when said program is run on a computer.

DADP

C1BUS    VSIG    M1BUS

| USCAP1 | → | | | VCTRL | → | M1 |

CU

| USCAP2 | → | | | DCTRL | → | M2 |

C2BUS    DSIG

VCTRL    DCTRL

M2BUS

| BAT | | CTRL-IN |

FIG. 1

FIG. 2

P    VS    V

LP1    LP2    CP

V1

ωS    V2    CTRLP

0    ω2    ω1    ω

LP4    LP3

LP5

FIG. 2

FIG. 3

FIG. 4

**RÉFÉRENCES CITÉES DANS LA DESCRIPTION**

**Documents brevets cités dans la description**

- WO 2014148978 A1
- JP H07110711 A